# EUROPEAN PATENT APPLICATION

(11) **EP 2 581 873 A1**
(43) Date of publication of application: **17.04.2013**
(21) Application number: 11792243.5
(22) Date of filing: 13.05.2011
(51) Int. Cl.: G06Q 50/00, G06F 1/28, G06F 3/048, H02J 3/00

(54) **POWER CONSUMPTION AMOUNT DISPLAY DEVICE**

(30) Priority: 10.06.2010 JP 2010132781
(71) Applicant: Toshiba Carrier Corporation, Tokyo 108-8580 (JP)
(72) Inventor: KOIZUMI, Tetsuya, Fuji-shi, Shizuoka 416-8521 (JP)
(74) Representative: Granleese, Rhian Jane
(86) International application number: PCT/JP2011/061021
(87) International publication number: WO 2011/155285

(57) **Abstract**

According to one embodiment, a power consumption amount display connected to a measurement value memory for memorizing a power consumption amount measurement value of a monitor target device includes: a monitor information selecting portion for a user to select a monitor target month and a comparison target month of the power consumption amount measurement value; a measurement value obtaining portion for obtaining, from the measurement value memory, the power consumption amount measurement values corresponding to the monitor target month and the comparison target month which are selected at the monitor information selecting portion; a display information generating portion capable of generating display information by shifting a date of the comparison target month obtained at the measurement value obtaining portion, such that a day of a week of the date of the comparison target month coincides with a day of a week of a date of the monitor target month obtained at the measurement value obtaining portion, allowing the date of the comparison target month to correspond to the date of the monitor target month, and arranging and displaying per day the power consumption amount measurement values of the corresponding dates; and a display portion for displaying the display information generated at the display information generating portion.

## Description

### Technical Field

Embodiments described herein relate generally to a power consumption amount display for displaying measurement data of power consumption amount in office buildings, factories, or the like.

### Background Art

Conventionally, in buildings such as office or factory, as energy saving measures, an effort is being made for reducing the power consumption amount by devices in the building. For reducing the power consumption amount, it is effective to store measurement data of the power consumption amount within a predetermined period and to analyze the measurement data.

Then, in the analysis of the measurement data of the power consumption amount in the building, as the case may be, the measurement data of the power consumption amount in the monitor target period is compared with the measurement data of the power consumption amount in the same period of the previous month or previous year.

### Citation List

### Patent Literature

PTL 1: JP 2005-312142 A

### Summary of Invention

In comparing the measurement data, the comparison is sometimes made between the measurement data of the power consumption amount per day of one month as the monitor target and the measurement data of the power consumption amount per day of one month in the past. In this case, allowing the data of the same date to correspond to each other, as the case may be, sometimes causes the data of different days of the week to be made as comparison target.

However, in office buildings, factories, or the like, an operating day is distinguished from a non-operating day ordinarily by a day of the week; therefore, the power consumption amount is greatly different depending on whether or not the date falls on the operating day or the non-operating day. Thus, there was a problem that a proper analysis cannot be made by the comparison between the data having different days of the week.

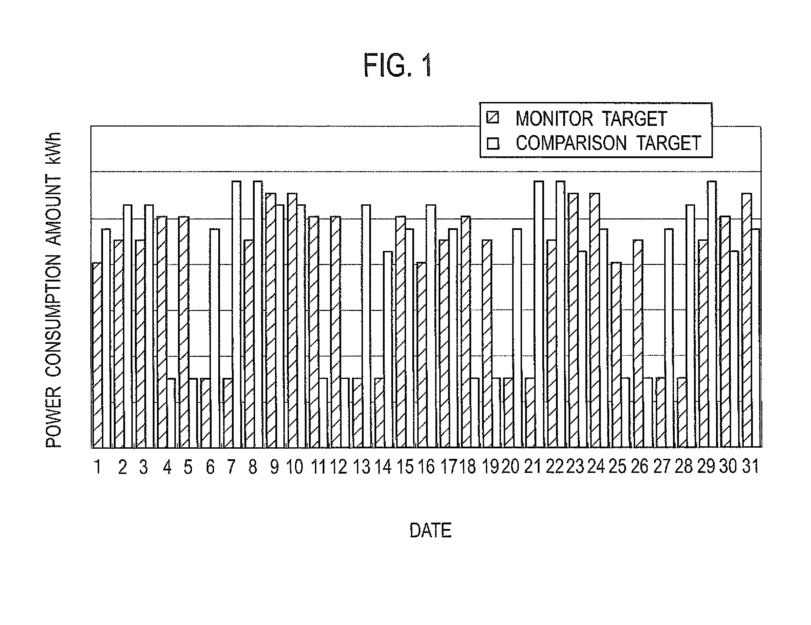

For example, as illustrated in Fig. 1, it is assumed that the data per day of the power consumption amount measurement value of the comparison target month is made to correspond, by the same date, to the data per day of the power consumption amount measurement value of the monitor target month and where such corresponding data are displayed. In this case, the monitor target month has the sixth and seventh days falling on Saturday and Sunday when the power consumption amount measurement value is smaller than that of other dates, while the comparison target month has the sixth and seventh days falling on weekdays, failing to be proper as a comparison target. Further, the monitor target month has fourth and fifth days falling on weekdays, while the comparison target month has the fourth and fifth days falling on Saturday and Sunday, in this case as well, failing to be proper as the comparison target.

In view of the above, the present invention has been made. It is an object of the present invention to provid a power consumption amount display for displaying measurement data of power consumption amount in a building by allowing the measurement data to correspond to past measurement data which is more proper as a comparison target.

For accomplishing the above object, according to one embodiment, a power consumption amount display connected to a measurement value memory for memorizing a power consumption amount measurement value of a monitor target device includes: a monitor information selecting portion for a user to select a monitor target month and a comparison target month of the power consumption amount measurement value; a measurement value obtaining portion for obtaining, from the measurement value memory, the power consumption amount measurement values corresponding to the monitor target month and the comparison target month which are selected at the monitor information selecting portion; a display information generating portion capable of generating display information by shifting a date of the comparison target month obtained at the measurement value obtaining portion, such that a day of a week of the date of the comparison target month coincides with a day of a week of a date of the monitor target month obtained at the measurement value obtaining portion, allowing the date of the comparison target month to correspond to the date of the monitor target month, and arranging and displaying per day the power consumption amount measurement values of the corresponding dates; and a display portion for displaying the display information generated at the display information generating portion.

### Brief Description of Drawings

[Fig. 1] Fig. 1 is a graph illustrating an example of display information displayed by a conventional power consumption amount display.
[Fig. 2] Fig. 2 is a block diagram illustrating a structure of a power consumption amount display system using a power consumption amount display according to one embodiment.
[Fig. 3] Fig. 3 is a structural diagram of a screen illustrating an example of an energy saving monitor screen displayed on the power consumption amount display according to the embodiment.
[Fig. 4] Fig. 4 is a structural diagram of a screen illustrating an example of a basic setting screen for setting basic information in the energy saving monitor screen displayed on the power consumption amount display according to the one embodiment.
[Fig. 5] Fig. 5 is a structural diagram of a screen illustrating an example of a period selecting screen for selecting a monitor target period and a comparison target period in the energy saving monitor screen displayed on the power consumption amount display according to the embodiment.
[Fig. 6] Fig. 6 is a flowchart illustrating an example of a process of generating the display information in the power consumption amount display according to the embodiment.
[Fig. 7] Fig. 7 is a drawing for explaining the shift state of the date in the comparison target month implemented by the process of generating of the display information in the power consumption amount display according to the embodiment.
[Fig. 8] Fig. 8 is a flowchart illustrating another example of the process of generating the display information in the power consumption amount display according to the embodiment.
[Fig. 9] Fig. 9 is a drawing for explaining the shift state of the date in the comparison target month implemented by another process of generating the display information in the power consumption amount display according to the embodiment.
[Fig. 10] Fig. 10 is a graph illustrating an example of display information displayed by the power consumption amount display according to the embodiment.

### Description of Embodiments

Hereinafter, embodiments will be explained in detail referring to the drawings.

### (Structure of power consumption amount display system according to one embodiment)

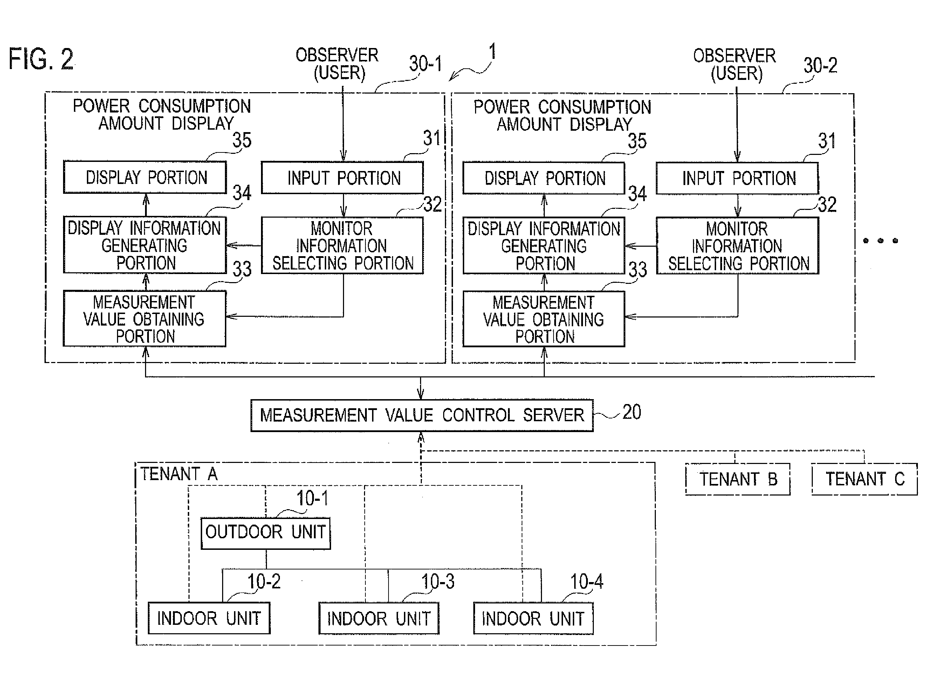

Structure of a power consumption amount display system 1 using a power consumption amount display according to one embodiment will be explained referring to Fig. 2.

According to the embodiment, the explanation will be made about a case where a power consumption amount of each of an outdoor unit 10-1 and a plurality of indoor units 10-2 to 10-4 connected with the outdoor unit 10-1 of an air conditioner installed for a tenant (shop) A in a building as a monitor target is measured and then the monitor information is displayed. That is, according to the embodiment, the explanation will be made about a case in which the device as the monitor target is the air conditioner.

The power consumption amount display system 1 according to the embodiment has a measurement value management server 20 as a measurement value memory connected with the outdoor unit 10-1 and indoor units 10-2 to 10-4 which are disposed in the building as the monitor target and a plurality of power consumption amount displays 30-1, 30-2 connected with the measurement value management server 20.

Each of the outdoor unit 10-1 and the indoor units 10-2 to 10-4 accumulates and holds a measurement value of power consumption amount of own device and transmits the measurement value to the measurement value management server 20 at a predetermined time interval (for example, 15 min. or 30 min.).

The measurement value management server 20 includes a clock function having a calendar function for specifying year, month, date, and day of the week. The measurement value management server 20 obtains the measurement value of the power consumption amount transmitted from the outdoor unit 10-1 and each of the indoor units 10-2 to 10-4 connected with the measurement value management server 20, and stores the power consumption amount per unit based on year, month, date, and time of the clock function.

Each of the power consumption amount displays 30-1 and 30-2 is composed of a general-purpose personal computer, a special controller, or the like and includes an input portion 31, a monitor information selecting portion 32, a measurement value obtaining portion 33, a display information generating portion 34, and a display portion 35.

The input portion 31 includes, for example, a mouse, a key board, and the like and inputs various pieces of information by an operation of an observer (user).

By the information inputted from the input portion 31, the monitor information selecting portion 32 implements such processes as setting basic information and selecting a monitor target device, a monitor target period of the power consumption amount, and a comparison target period before the monitor target period.

The measurement value obtaining portion 33 requests the measurement value management server 20 for the power consumption amount measurement value associated with the selected monitor target device which measurement values correspond to the monitor target month and comparison target month selected by the monitor information selecting portion 32 to obtain the data.

Based on the measurement value of the power consumption amount obtained at the measurement value obtaining portion 33 and the basic information set at the monitor information selecting portion 32, the display information generating portion 34 generates the display information to be displayed as the monitor information.

The display portion 35 displays the display information generated at the display information generating portion 34.

### (Operations of power consumption amount display system according to the embodiment)

Next, operations of the power consumption amount display system 1 according to the embodiment will be explained. According to the embodiment, the explanation will be made about a case where the monitor information is displayed in the power consumption amount display 30-1.

According to the embodiment, it is assumed that the measurement value management server 20 obtains the measurement value from the outdoor unit 10-1 and indoor units 10-2 to 10-4 at a predetermined time interval and stores the measurement value together with the obtained data of year, month, date, day of the week and time.

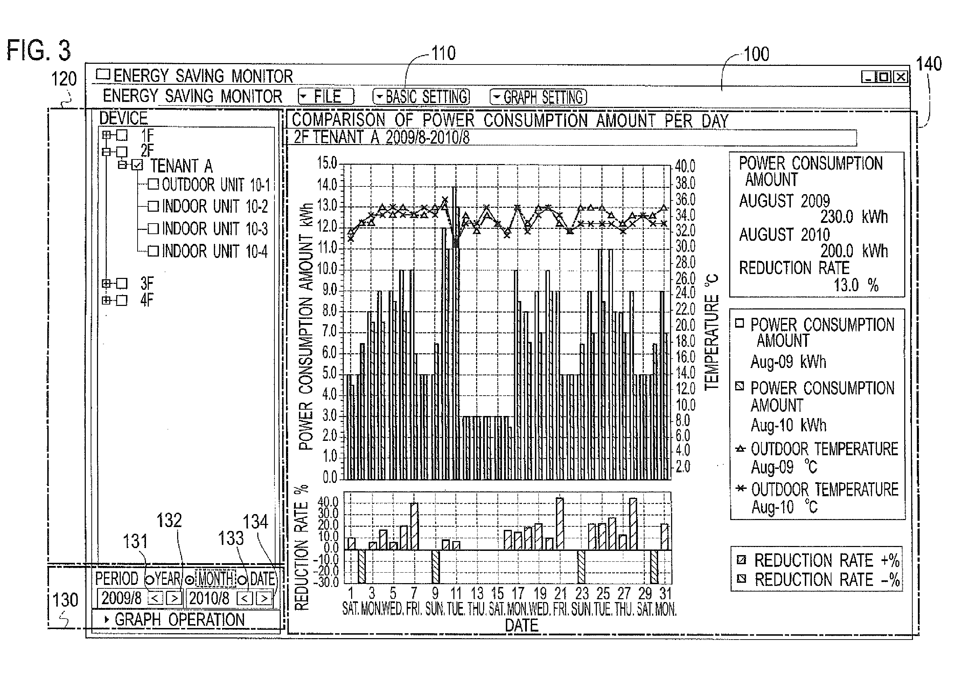

First, when the observer operates the input portion 31 of the power consumption amount display 30-1 to thereby start the process for displaying the monitor information, an energy saving monitor screen 100 as illustrated in Fig. 3 is displayed on the display portion 35.

The energy saving monitor screen 100 includes a "basic setting" button 110 for displaying a basic setting screen for setting basic information associated with the display of the monitor information, a monitor target device selecting area 120 for selecting the monitor target device individually, per area or per tenant, a monitor target period selecting area 130 for selecting the monitor target period and comparison target period, and a graph display area 140 for displaying, with a bar graph, the measurement value and reduction ratio of the power consumption amount corresponding to the selected monitor target device and selected monitor target period.

Next, the observer operates the energy saving monitor screen 100 from the input portion 31 to thereby allow the monitor information selecting portion 32 to implement the process of setting the basic information and the process of selecting the monitor target device and the monitor target period and comparison target period of the power consumption amount.

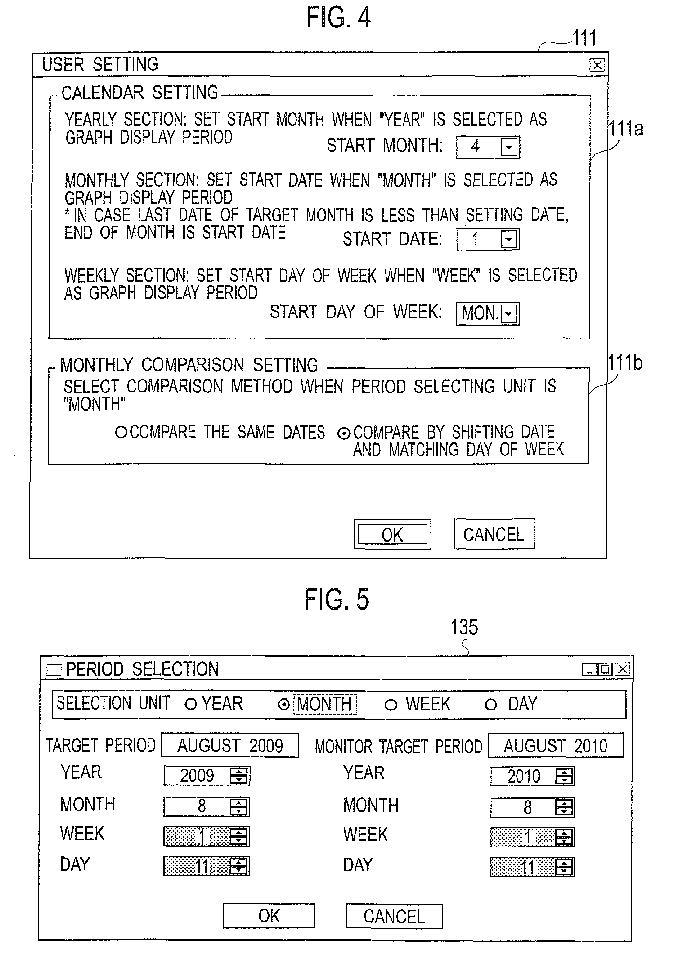

When the process of setting the basic information is to be implemented, first, by selecting the "basic setting" button 110 of the energy saving monitor screen 100, a basic setting screen 111 as illustrated in Fig. 4 is displayed on another window. Then, on the basic setting screen 111 thus displayed, the basic information associated with the display of the monitor information is set by the operation of the observer.

The basic setting screen 111 includes a calendar setting area 111a and a monthly comparison setting area 111b. The calendar setting area 111a can set calendar information of the display period of the graph displayed in the graph display area 140. When the time unit of the display period of the graph to be displayed in the graph display area 140 is selected as a monthly unit, the monthly comparison setting area 111b can select whether to arrange and display per day the power consumption amount measurement value of the monitor target month and the power consumption amount measurement value of the comparison target month by the same date or by shifting and thereby matching the day of the week.

According to the embodiment, in the calendar setting area 111a in the basic setting screen 111, a default is so set that, as the basic information, when the time unit of the display period of the graph is selected as a yearly unit, the start month of the display period is set as "April," when the time unit of the display period of the graph is selected as a monthly unit, the start date of the display period is set as "1st," and when the time unit of the display period of the graph is selected as a weekly unit, the start day of the week of the display period is set as "Monday." Further, in the monthly comparison setting area 111b in the basic setting screen 111, a default is so set as to select that, when the time unit of the display period of the graph to be displayed in the graph display area 140 is selected as a monthly unit, the date of the comparison target month is so shifted that the day of the week of the date of the comparison target month matches with the day of the week of the date of the monitor target month, and then the measurement data of the power consumption amount is arranged and displayed per day.

In the basic setting screen 111, the setting of the display is accomplished by the observer to select an "OK" button in the lowermost section and the display screen returns to the energy saving monitor screen 100 in Fig. 3. Herein, the explanation will be made in a condition that the time unit of the display period of the graph is selected as a monthly unit in the basic setting screen 111.

Next, the observer operating the input portion 31 marks, in the monitor target device selecting area 120 of the calendar setting area 111a, the check box of the area or device as the monitor target, to thereby make the selection individually, per area or per tenant.

According to the embodiment, as illustrated in Fig. 3, it is assumed that all devices in a tenant A on the second floor of the building is selected as the monitor target in the monitor target device selecting area 120.

Next, the observer operating the input portion 31 sets the monitor target period and comparison target period in the monitor target period selecting area 130 of the energy saving monitor screen 100.

According to the embodiment, as illustrated in Fig. 3, it is assumed that the selection is made such that the time unit of each of the monitor target period and comparison target period in the monitor target period selecting area 130 is set to the monthly unit, and the monitor target month is set as "August 2010" and the comparison target month as "August 2009."

The comparison target month may be selected by making an operation in the reverse buttons 131, 133 or forward buttons 132, 134 in the monitor target period selecting area 130 or may be selected by making an operation in a period selecting screen 135 (as illustrated in Fig. 5) which is displayed by making a selection in the monitor target period selecting area 130.

In the period selecting screen 135, year, month, week, and date of each of the monitor target period and the comparison target period are selected by operating upper and lower triangle marks respectively displayed in input boxes. In Fig. 5, since the selection has been already made in the above-described basic setting screen 111 such that the time unit of each of the monitor target period and the comparison target period is set to the monthly unit, it is not necessary to set as for week and date which are each a time unit smaller than the monthly unit and, therefore, it is so shown that week and date cannot be inputted.

In this way, once the monitor information selecting portion 32 implements the process for setting the basic information, and the processes for selecting the monitor target device, and the monitor target period and comparison target period of the power consumption amount, the measurement value obtaining portion 33 obtains, from the measurement value management server 20, the power consumption amount measurement value associated with the selected monitor target device in the selected monitor target month and selected comparison target month.

Next, based on the measurement value of the power consumption amount obtained at the measurement value obtaining portion 33 and the basic information set at the monitor information selecting portion 32, the display information generating portion 34 generates the display information to be displayed as the monitor information.

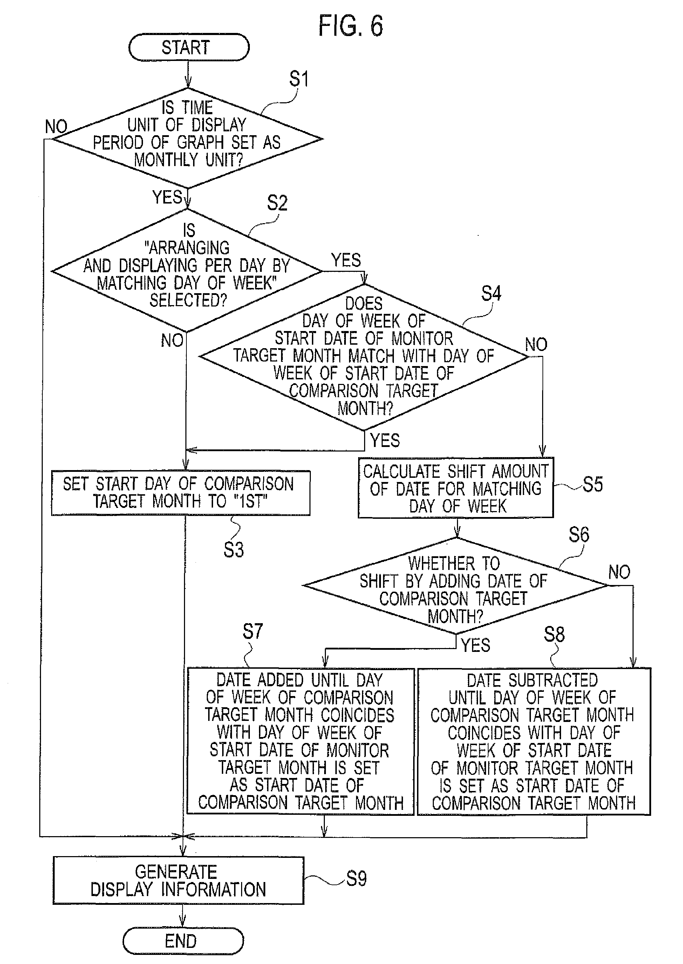

An example of the generating process of the display information at the display information generating portion 34 will be explained referring to a flowchart in Fig. 6.

First, based on the information selected at the monitor information selecting portion 32, it is determined whether or not the time unit of the display period of the graph to be displayed is selected as a monthly unit (S1).

Since the time unit of the display period is set as a monthly unit ("YES" at S1), the process moves to step S2 to thereby determine whether or not "arranging and displaying per day by matching a day of the week" in the set basic information is selected (S2). If "arranging and displaying per day by matching a day of the week" is not selected ("NO" at S2), the start date of the comparison target month is not shifted but is set to "1st" and is so set as to correspond to "1st" set as the start date of the display period of the monitor target month (S3). Since "arranging and displaying per day by matching a day of the week" is selected in the basic information ("YES" at S2), the process moves to step S3 to thereby determine whether or not the day of the week of the start date of the monitor target month coincides with the day of the week of the start date of the comparison target month (S4).

When the day of the week of the start date of the monitor target month coincides with the day of the week of the start date of the comparison target month ("YES" at S4), the start date of the comparison target month is set to "1st" and is so set as to correspond to "1st" set as the start date of the display period of the monitor target month (S3).

When the day of the week of the start date of the monitor target month is determined not to coincide with the day of the week of the start date of the comparison target month at step S4 ("NO" at S4), the shift amount is calculated for each of such cases that the date is added and subtracted until the day of the week of the comparison target month coincides with the day of the week of the start date of the monitor target month (step S5).

Then, of the cases of addition and subtraction, whichever having a smaller shift amount thus calculated is selected and used for shifting the date of the comparison target month.

When the shift amount is smaller in the case of the addition, it is determined that the date of the comparison target month is added and then shifted ("YES" at step S6). Then, by adding and shifting the date, the date of the day of the week which coincides with the day of the week of the start date of the monitor target month is set as the start date of the comparison target month (S7).

When the shift amount is smaller in the case of the subtraction, it is determined that the date of the comparison target month is subtracted and then shifted ("NO" at S6). Then, by subtracting and shifting the date, the date of the day of the week which coincides with the day of the week of the start date of the monitor target month is set as the start date of the comparison target month (S8).

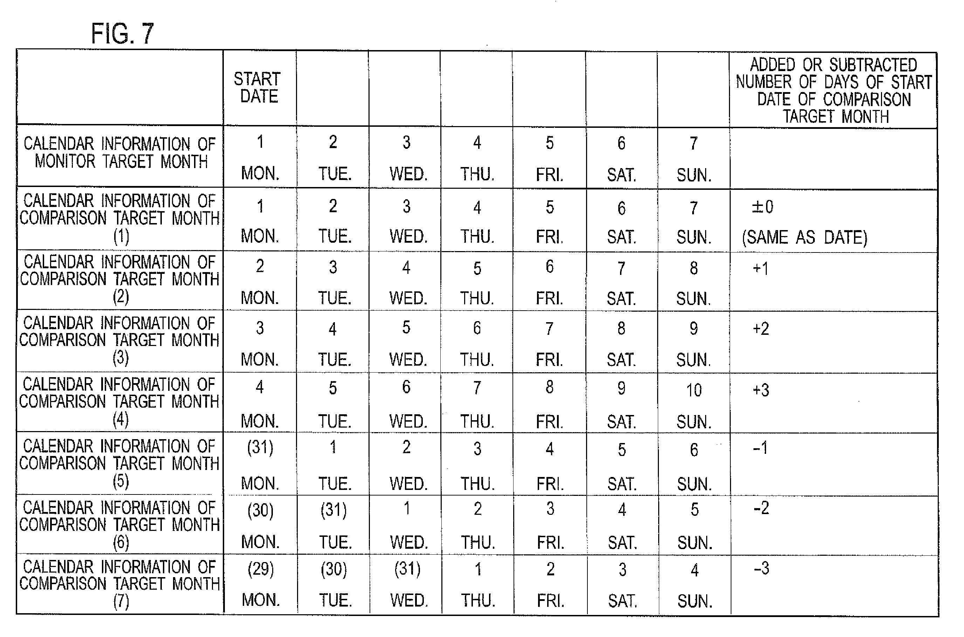

For example, when the day of the week of the start date of the monitor target month coincides as "Monday" with the day of the week of the start date of the comparison target month as "Calendar information of comparison target month (1)" illustrated in Fig. 7, the start date of the comparison target month is set to "1st" as is without adding the date. Further, when the day of the week of the start date of the monitor target month does not coincide with the day of the week of the start date of the comparison target month as "Calendar information of comparison target month (2)", first, for shifting such that the day of the week of the comparison target month coincides with the day of the week of the start date of the monitor target month, it is determined to implement the shift by addition since addition (+1 day) is smaller in shift amount than subtraction (-6 days). Then, the date "2nd" causing a coincided day of the week by addition is set as the start date of the comparison target month.

Likewise, when the day of the week of the start date of the monitor target month does not coincide with the day of the week of the start date of the comparison target month as "Calendar information of comparison target month (3)", first, for shifting such that the day of the week of the comparison target month coincides with the day of the week of the start date of the monitor target month, it is determined to implement the shift by addition since addition (+2 days) is smaller in shift amount than subtraction (-5 days). Then, the date "3rd" causing a coincided day of the week by addition is set as the start date of the comparison target month.

Further, when the day of the week of the start date of the monitor target month does not coincide with the day of the week of the start date of the comparison target month as "Calendar information of comparison target month (5)", first, for shifting such that the day of the week of the comparison target month coincides with the day of the week of the start date of the monitor target month, it is determined to implement the shift by subtraction since subtraction (-1 day) is smaller in shift amount than addition (+6 days). Then, the last date "31st" of the previous month of the comparison target month causing a coincided day of the week by subtraction is set as the start date of the comparison target month.

Likewise, when the day of the week of the start date of the monitor target month does not coincide with the day of the week of the start date of the comparison target month as "Calendar information of comparison target month (6)", firstly, for shifting such that the day of the week of the comparison target month coincides with the day of the week of the start date of the monitor target month, it is determined to implement the shift by subtraction since subtraction (-2 days) is smaller in shift amount than addition (+5 days). Then, the second to the last date "30th" of the previous month of the comparison target month causing a coincided day of the week by subtraction is set as the start date of the comparison target month.

In this way, the date causing the coincided day of the week is set as the start date of the comparison target month and is so set as to correspond to "1st" set as the start date of the display period of the monitor target month.

Implementing the processes as set forth above shifts the date of the comparison target month within a range of three days before and after the date of the monitor target month.

Then, based on the information of the start date of the comparison target month so set at step S3, step S7, or step S8 as to correspond to the start date of the display period of the monitor target month and based on the measurement value of the power consumption amount obtained at the measurement value obtaining portion 33, the display information generating portion 34 generates the display information for arranging and displaying per day the power consumption amount measurement values of corresponding dates of the monitor target month and comparison target month. Further, even when the time unit of the display time of the graph to be displayed is not selected as a monthly unit at step S1 ("NO" at S1), the display information generating portion 34 generates the display information with the selected time unit (S9).

In this way, adding or subtracting the date within a range of three days before and after the date of the monitor target month such that the day of the week of the start date of the comparison target month coincides with the day of the week of the start date of the monitor target month can match the day of the week with the smallest shift amount, thus making it possible to generate the display information with the shift of date suppressed to the minimum. That is, according to the embodiment, it is so configured that, in the coinciding of the day of the week between the monitor target month and the comparison target month, the day of the closest date is selected. Thus, the shift amount can be three days at maximum. As a result, in the case of a device such as an air conditioner having the power consumption amount changeable by seasonal change, it is possible to make an optimum comparison by reducing influence of the seasonal change.

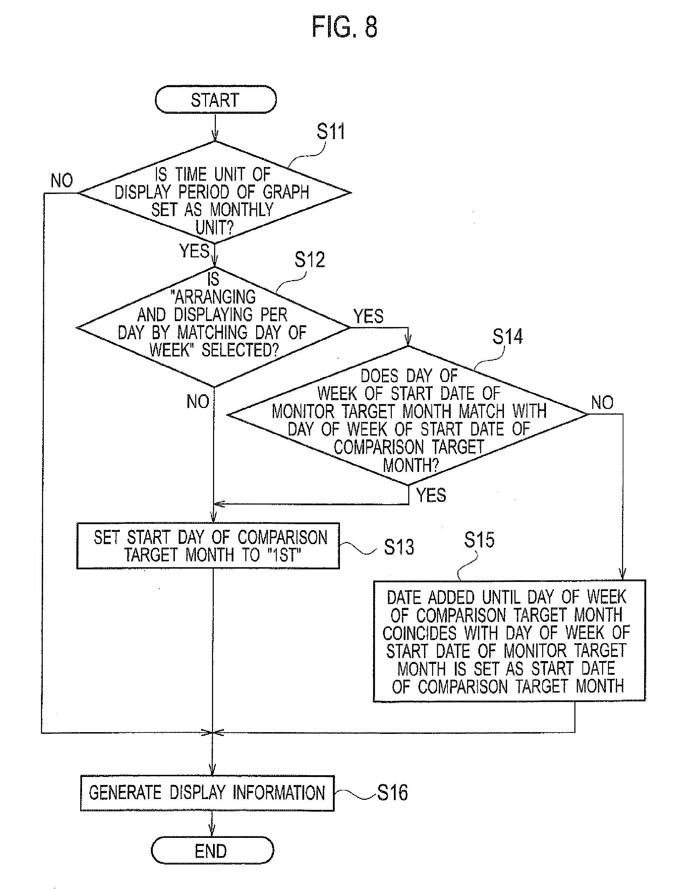

Further, referring to the flowchart in Fig. 8, an explanation will be made about another example of the generating process of the display information. This example adopts such a method that, when the day of the week of the start date of the monitor target month does not coincide with the day of the week of the start date of the comparison target month, the date of the comparison target month is shifted only to the addition side.

In Fig. 8, processes at steps S11 to S 14 are similar to the processes at steps S1 to S4 in Fig. 6, and therefore, detailed explanations thereof will be omitted.

At step S 14, when it is determined that the day of the week of the start date of the monitor target month does not coincide with the day of the week of the start date of the comparison target month ("NO" at S 14), the date is sequentially added until the day of the start date of the comparison target date coincides with the day of the week of the start date of the monitor target month, to thereby set the date having the coincided day of the week as the start date of the comparison target month (S 15).

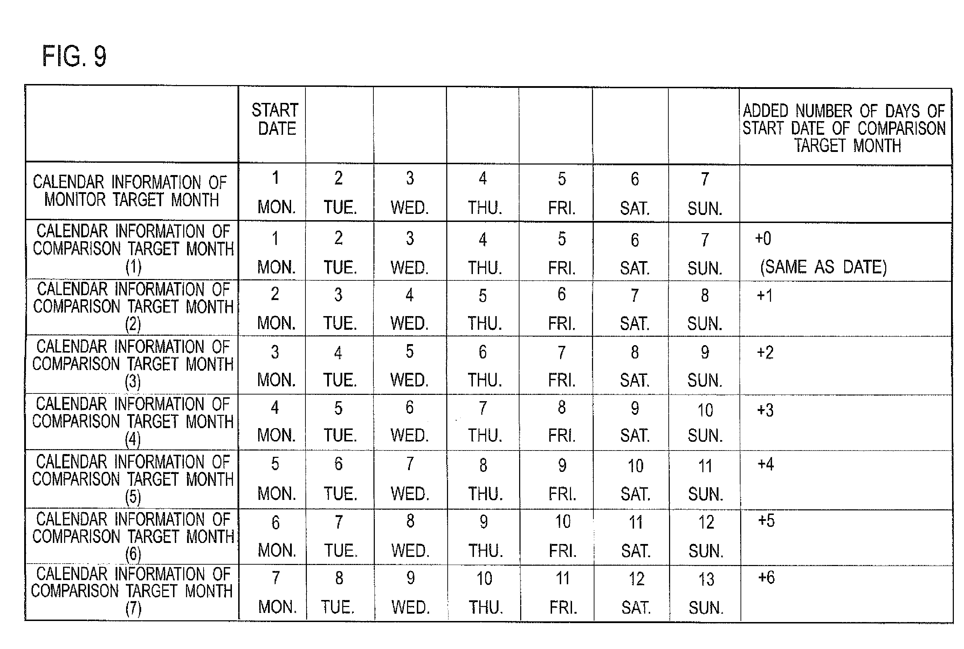

For example, when the day of the week of the start date of the monitor target month coincides as "Monday" with the day of the week of the start date of the comparison target month as "Calendar information of comparison target month (1)" illustrated in Fig. 9, the start date of the comparison target month is set to "1st" as is without adding the date.

Further, when the day of the week of the start date of the monitor target month does not coincide with the day of the week of the start date of the comparison target month as "Calendar information of comparison target month (2)", first, the date is shifted by adding "one day" (added number of days: +1) such that the day of the week of the start date of the comparison target month coincides with "Monday" which is the day of the week of the start date of the monitor target month. Then, the date "2nd" which is the date having the coincided day of the week is set as the start date of the comparison target month.

Further, when the day of the week of the start date of the monitor target month does not coincide with the day of the week of the start date of the comparison target month as "Calendar information of comparison target month (3)", first, the date is shifted by adding "two days" (added number of days: +2) such that the day of the week of the start date of the comparison target month coincides with "Monday" which is the day of the week of the start date of the monitor target month. Then, the date "3rd" which is the date having the coincided day of the week is set as the start date of the comparison target month.

Likewise, in the case of "Calendar information of comparison target month (4)" to "Calendar information of comparison target month (7)", the adding process is implemented and thereby the date having the coincided day of the week is set as the start date of the comparison target month. Then, the date having the coincided day of the week is so set as to correspond to "1st" set as the start date of the display period of the monitor target month.

Implementing the processes as set forth above shifts the date of the comparison target month within a range of six days after the date of the monitor target month.

Then, based on the information of the start date of the comparison target month so set at step S 13 or step S15 as to correspond to the start date of the display period of the monitor target month and based on the measurement value of the power consumption amount obtained at the measurement value obtaining portion 33, the display information generating portion 34 generates the display information for arranging and displaying per day the power consumption amount measurement values of corresponding dates of the monitor target month and the comparison target month. Further, even when the time unit of the display time of the graph to be displayed is not selected as a monthly unit at step S11 ("NO" at S11), the display information generating portion 34 generates the display information with the selected time unit (S6).

In this way, by sequentially adding the date such that the day of the week of the start date of the comparison target month coincides with the day of the week of the start date of the monitor target month, the display information can be generated by only the data of the month that is selected as the comparison target month without having the comparison target data displayed in such a manner as to stride over the previous month. Further, when the power consumption amount measurement values are stored by being classified per month in the measurement value management server 20, the process of obtaining the measurement value can be simplified. According to this method, since the start date of the monitor target month does not date back to the previous month, a feeling of strangeness can be reduced in the case of monthly comparison. Further, since the number of days to be shifted is six at a maximum in this method as well, even in the case the power consumption amount is changeable by seasonal change, it is possible to make a comparison by reducing influence of the seasonal change, although this method is slightly inferior to the embodiment illustrated in Fig. 6.

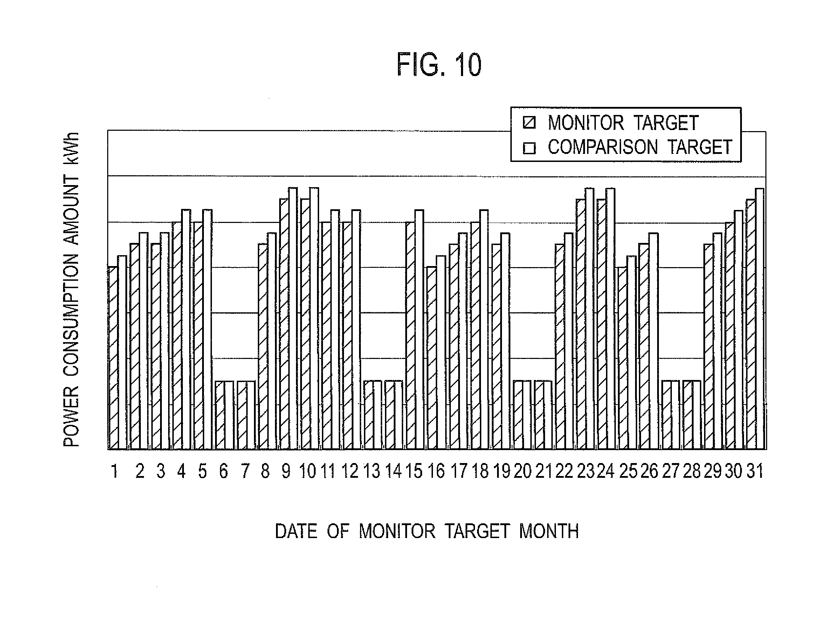

The generated display information is displayed in the graph display area 140 of the energy saving monitor screen 100 displayed in the display portion 35. An example of the display information displayed in the graph display area 140 is illustrated in Fig. 10.

According to the graph of Fig. 10, the data of the same day of the week of the power consumption amount measurement value of the comparison target month is arranged and displayed per day as set so as to correspond to the data per day of the power consumption amount measurement value of the monitor target month.

With the data displayed as above, even when the power consumption amount of the building where the non-operating day falls on Saturday and Sunday and the power consumption amount is greatly different from that of the weekday is monitored, a proper comparison can be made between the data of the different months in view of the influence by the day of the week. This can support the monitoring operation of the observer.

Further, in terms of the power consumption amount measurement value of the monitor target month and the power consumption amount measurement value of the comparison target month, by selecting, in the setting of the basic information, whether "arrange and display per day by the same date" or "arrange and display per day by matching the day of the week", it is made possible not to implement the process of shifting the date when comparing, between the data of different months, the power consumption amount associated with a device uninfluenced by the day of the week, thus enabling to more simply implement the generating process of the display information.

Further, as illustrated in the lower part of the comparison bar graph of the power consumption amount of each date of the graph display area 140 in Fig. 3, the monitoring operation of the observer may be further supported by displaying the graph illustrating the reduction rate of the power consumption amount per day of the monitor target month compared with the comparison target month..

Further, according to the embodiment, the explanation has been made about the case in which the measurement values of the power consumption amounts transmitted from the outdoor unit 10-1 and indoor units 10-2 to 10-4 are received by and stored in the measurement value management server 20 but the present invention is not limited to this. It is possible to install a power meter for measuring the power consumption amounts of a plurality of outdoor units and indoor units and obtaining and storing, by the measurement value management server 20, the measurement value of the power consumption amount measured by the power meter.

In this case, it is possible to distribute the measurement value measured by the power meter at the operation rate or capacity rate of the outdoor units or indoor units connected to the power meter to thereby calculate and store the power consumption amount by each of the indoor units and outdoor units.

Further, according to the embodiment, the power consumption amount measurement value of the monitor target month and the power consumption amount measurement value of the comparison target month are arranged and displayed per day on the bar graph for ease of comparison; however, they may be arranged and displayed per day in a form of a numeral table.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power consumption amount display connected to a measurement value memory for memorizing a power consumption amount measurement value of a monitor target device, the power consumption amount display comprising:
a monitor information selecting portion for a user to select a monitor target month and a comparison target month of the power consumption amount measurement value;
a measurement value obtaining portion for obtaining, from the measurement value memory, the power consumption amount measurement values corresponding to the monitor target month and the comparison target month which are selected at the monitor information selecting portion;
a display information generating portion capable of generating display information by
shifting a date of the comparison target month obtained at the measurement value obtaining portion, such that a day of a week of the date of the comparison target month coincides with a day of a week of a date of the monitor target month obtained at the measurement value obtaining portion,
allowing the date of the comparison target month to correspond to the date of the monitor target month, and
arranging and displaying per day the power consumption amount measurement values of the corresponding dates; and
a display portion for displaying the display information generated at the display information generating portion.

2. The power consumption amount display according to claim 1, wherein
the monitor information selecting portion allows the user to further select whether to arrange and display per day the power consumption amount measurement value of the monitor target month and the power consumption amount measurement value of the comparison target month by the same date or by matching the day of the week;
when the monitor information selecting portion selects to arrange and display per day by the same date, the display information generating portion generates the display information so as to arrange and display per day by the same date the power consumption amount measurement value of the monitor target month and the power consumption amount measurement value of the comparison target month, and
when the monitor information selecting portion selects to arrange and display per day by matching the day of the week, the display information generating portion generates the display information by
shifting the date of the power consumption amount measurement value of the comparison target month, such that the day of the week of the date of the power consumption amount measurement value of the comparison target month coincides with the day of the week of the date of the power consumption amount measurement value of the monitor target month,
allowing the date of the power consumption amount measurement value of the comparison target month to correspond to the date of the power consumption amount measurement value of the monitor target month, and
arranging and displaying per day the power consumption amount measurement values of the corresponding dates.

3. The power consumption amount display according to claim 1 or 2, wherein
when shifting the date of the power consumption amount measurement value of the comparison target month, the display information generating portion implements the shifting within a range of three days before and after the date of the monitor target month.

4. The power consumption amount display according to claim 1 or 2, wherein
when shifting the date of the power consumption amount measurement value of the comparison target month, the display information generating portion implements the shifting within a range of six days after the date of the monitor target month.

5. The power consumption amount display according to claim 1 or 2, wherein
the display information generating portion generates the display information such that a graph in which the power consumption amount measurement values of the corresponding dates are arranged per day is displayed.

6. The power consumption amount display according to claim 1 or 2 wherein,
the display information generating portion generates the display information such that a numeral table in which the power consumption amount measurement values of the corresponding dates are arranged per day is displayed.
